(19) **Europäisches Patentamt**
**European Patent Office**
**Office européen des brevets**

(11) **EP 1 463 040 B1**

(12) **EUROPEAN PATENT SPECIFICATION**

(45) Date of publication and mention
of the grant of the patent:
**29.04.2009 Bulletin 2009/18**

(51) Int Cl.:
*G11B 7/00* (2006.01)        *G11B 7/24* (2006.01)
*G11B 19/02* (2006.01)        *G11B 19/247* (2006.01)

(21) Application number: **04251848.0**

(22) Date of filing: **29.03.2004**

(54) **Method and device for use in the manufacture of optical disk media**

Verfahren und Vorrichtung  zur Herstellung von optischen Plattenmedien

Procédé et dispositif utilisés dans la fabrication de disque optique

(84) Designated Contracting States:
**DE ES FR GB IT NL**

(30) Priority: **28.03.2003  JP 2003091078**
**06.11.2003  JP 2003376791**

(43) Date of publication of application:
**29.09.2004  Bulletin 2004/40**

(73) Proprietor: **Ricoh Company, Ltd.**
**Tokyo 143-8555 (JP)**

(72) Inventor: **Watanabe, Hisao**
**Ohta-ku**
**Tokyo 143-8555 (JP)**

(74) Representative: **Mounteney, Simon James**
**Marks & Clerk LLP**
**90 Long Acre**
**London**
**WC2E 9RA (GB)**

(56) References cited:
**EP-A- 0 827 139**        **US-A- 5 699 335**
**US-A- 5 808 995**        **US-B1- 6 452 898**

- **PATENT ABSTRACTS OF JAPAN vol. 2000, no. 09, 13 October 2000 (2000-10-13) & JP 2000 163809 A (YAMAHA CORP), 16 June 2000 (2000-06-16)**
- **PATENT ABSTRACTS OF JAPAN vol. 1996, no. 12, 26 December 1996 (1996-12-26) & JP 08 203133 A (RICOH CO LTD), 9 August 1996 (1996-08-09)**
- **PATENT ABSTRACTS OF JAPAN vol. 017, no. 696 (P-1664), 20 December 1993 (1993-12-20) & JP 05 234152 A (RICOH CO LTD), 10 September 1993 (1993-09-10)**
- **PATENT ABSTRACTS OF JAPAN vol. 2000, no. 22, 9 March 2001 (2001-03-09) & JP 2001 143376 A (RICOH CO LTD), 25 May 2001 (2001-05-25)**
- **PATENT ABSTRACTS OF JAPAN vol. 1997, no. 06, 30 June 1997 (1997-06-30) & JP 09 035408 A (RICOH CO LTD), 7 February 1997 (1997-02-07)**
- **PATENT ABSTRACTS OF JAPAN vol. 1997, no. 05, 30 May 1997 (1997-05-30) & JP 09 017008 A (SONY CORP), 17 January 1997 (1997-01-17)**

**Description**

1. Technical Field

The present invention relates to a method and a device for generating a formatter driving clock according to a CLV (Constant Liner Velocity) format formation by a CAV (Constant Angular Velocity) driving, a device for generating a driving clock, a method and a device for exposing an optical disc master plate, an optical disc driving device, an optical disc master plate using the same, and an information recording medium using the optical disc master plate.

2. Description of Related Art.

Recently, there has been increased demand for an optical disk media with a large capacity in order to record a moving picture with high quality, and to obtain storage media with a fast access speed and large capacity. As a method for increasing the capacity, there have been proposed and studied various methods such as a light beam spot method for recording and reproducing by using near-field light, a method for narrowing a track pitch, a method for further shortening a pit length, a method for multi-layering a recording layer of optical disk media, a method for multi-valuing recording information, and so on.

The method for narrowing a track pitch essentially includes crosstalk between the adjacent tracks. As a method for decreasing such crosstalk, for example, the invention disclosed in Japanese Patent Laid-Open 2000-163809 has been known. In this invention, in order to prevent the deterioration of a reproduction wobble signal by the crosstalk of adjacent track wobble, there has been proposed a wobble format that a specific relationship is maintained to a phase relationship with the adjacent track wobble with respect to the present track wobble, and a reproduction signal to be obtained is not influenced by the crosstalk.

However, it is not so easy to form an accurate wobble format on an optical disc master plate.

The reasons will be explained below. When general CLV wobble format exposure is carried out by CLV driving, in order to obtain a constant exposure linear velocity, as the movement of exposure radius position from an inner circumference to an outer circumference, a rotation speed of turntable on which an optical disc master plate is placed, and the traversal movement speed of the turntable (or an optical moving table on which an optical system for illuminating an exposure optical beam is placed) are required to be smoothly changed (reduced) in inverse proportion to the radius position of the optical disc master plate.

However, the turntable includes high inertia. Therefore, it is extremely difficult to rotate the turntable by following up an ideal rotation speed, and to achieve the CLV driving accuracy which can maintain the effective phase relationship between the adjacent tracks with respect to the wobble, and the like formed on an information track.

That is because the conventional CLV format disc did not require such accuracy. An exposure method by using together with exposure beam irradiating position correction can be considered, but the method increases a cost because of requiring a detector, and the like having high accuracy of a rotational position. Moreover, a new defect such as controlling the rotation speed of the turntable is caused, so that the method lacks in practicality.

As another method, the CLV wobble format exposure method by CAV driving has been known. In this method, the turntable rotates at a constant rotation speed. The rotation accuracy is thereby extremely high. The rotational position accuracy between adjacent tracks is accurate enough for obtaining the resolution which is equal or less than one-several of a wobble length. However, in order to form the CLV wobble format on a rotatable optical disc master plate by the CAV driving, a basic operation clock of format signal generation device for generating a wobble format signal should be changed in response to a position in the radius direction of the optical disc master plate, and a wobble periodic length (time base) which is generated by this clock is required to be changed. More specifically, the physical length of the wobble to be formed on the master plate should be constant by shortening the wobble periodic length (time base) as heading toward the outer circumference.

Moreover, as another method, the invention disclosed in Japanese Patent-Laid Open H05-234152 has been known as an optical disc master plate exposure method. The method can stably rotate and feed both of the optical disc master plates of a CAV preformat and a CLV preformat when the plate is driven by a CAV driving method, and in order to obtain the optical disc master plate including the preformat with high pit position accuracy, the method modulates laser from a laser source and forms a pit on the surface of the master plate by irradiating the modulated light which is condensed by an objective lens. In this invention, the optical disc master plate rotates by the CAV driving method, and the laser to be irradiated on the optical disc master plate is modulated by using laser modulation means driven by modulation signal generation means, and then the CLV preformat is formed on the optical disc master plate rotated by the CAV driving method with this modulated laser.

Furthermore, as a method for processing a stamper with high accuracy of a recording signal by changing a processing speed with a simple structure, the invention disclosed in Japanese Patent Laid-Open H06-89468 has been known. In this invention, when the stamper is made, it is repeated that part of a mastering signal previously stored in a signal storing device is successively red by a CPU and stored in a buffer. On the other hand, modulation means continuously outputs the signals in the buffer to a signal correcting means at a specified signal transfer speed after the modulation. The processing of the stamper is executed by a cutting machine in a real time in accordance with the continuously output signals after the correction by the signal correcting means.

As a method for recording an information pit train on an original glass disk, the invention disclosed in Japanese Patent Laid-Open H08-203133 has been known. In order to form the information pit train having a constant physical data length on the original glass disk by a stabilized control using the CAV driving, laser projected from a laser light source is modulated by a laser modulator to be irradiated on the original glass disk, and the original glass disk rotates by a turntable and a rotation motor while the original glass disk is transversely moved by a transversal feeding table and a transversal feeding motor.

In this invention, a rotation signal and a feeding position signal are input to a modulation signal control portion, and the modulation signal control portion generates a clock which is applied to a modulation signal generation portion based on a command form a MPU. At the same time, the modulation signal control portion also drives the original optical disk by the CAV in accordance with the setup of a first divider and a second divider, and records an information pit having a constant physical data length on the original glass disk.

In an optical recording device, for a CLV control while recording a signal, a rotation speed of recording disc and a feeding speed of optical recording system are varied by detecting a position in the radius direction of disc; however, the invention in Japanese Patent Laid-Open H09-17115 discloses the invention having an object to improve recording accuracy by adopting a constant rotation speed and a feeding speed.

This invention notes that a pit length is changed in the direction to the outer circumference of disc by adopting a basic clock of EFM modulation signal for modulating recording laser as a frequency lower than a basic clock in the inner circumference portion of the disc and a frequency higher than the basic clock in the outer circumference portion of the disc, and a system which brings the same effect when the recording is carried out by varying the rotation speed and the feeding speed of disc is configured.

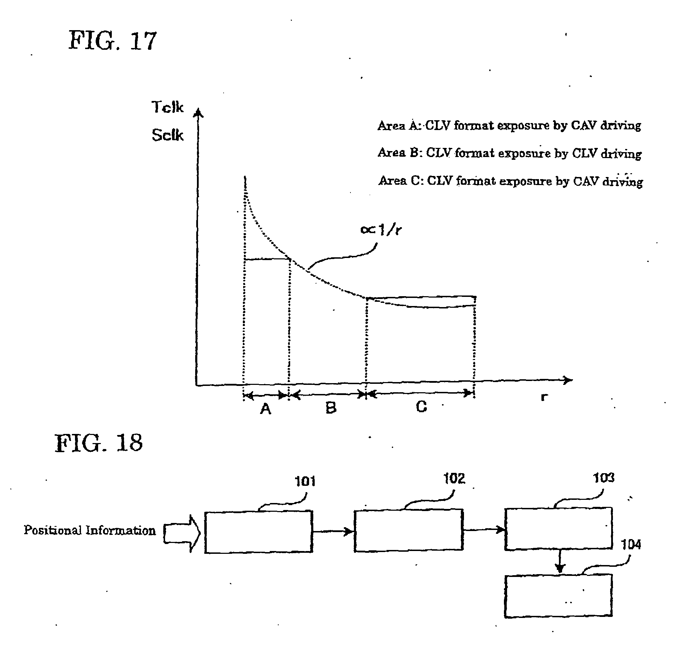

In other words, in this invention, as shown in FIG. 18, the positional information of the consecutive exposure radius position is input to an arithmetic circuit 101, and the basic clock frequency supplied to an encoder 103 is calculated by the arithmetic circuit 101, and then the calculated result is input to the encoder 103 through a PLL circuit 102.

Meanwhile, a rotation system of original glass disk and an optical feeding system of condensed optical system are driven at a constant speed. The clock of the encoder 103 for changing a recording signal is a variable clock signal in proportional to a recording position, so that the same effect when the encoded EFM modulation signal is recorded by a fixed basic clock with a CLV control can be obtained.

In Japanese Patent Laid-Open 2001-143376, as the invention related to an optical disc master plate exposure device, the invention related to a CLV driving control method by the generation of CLV driving command pulses having high accuracy with an ideal and small local deviation of a spindle and liner motor, a CLV disc format which enables the generation of further ideal CLV driving command pulses with high accuracy without generating an accumulative error accompanying an arithmetic error for every track, and a recording medium with the CLV disc format which has an ideal arrangement and track numbers in the circumferential direction of each access unit on a disc.

The invention describes that a spindle rotation command pulse train and a slider movement command pulse train are generated by dividing a basic clock pulse train, whose number is in proportion to an ideal truck length determined by a starting radius position of a spiral, the number of trucks, and a spiral track pitch, for one rotation. The spindle motor and the slider are driven and controlled by the spindle rotation command pulse train and the slider movement command pulse train.

There has been accordingly proposed various methods for CLV format exposure by CAV driving. However, these methods include following defects.

For example, the invention disclosed in Japanese Patent Laid-Open H05-234152 generates the clock by using radius position information and a voltage-controlled oscillator, so that the clock includes uncertainty such as analogue, and does not secure sufficient accuracy.

Moreover, in the invention disclosed in Japanese Patent Laid-Open H06-89468, the correction is carried out by using the value of data length per unit of time. The invention also generates the clock by using a voltage-controlled oscillator, so that the clock includes uncertainty such as analogue, and dose not secure sufficient accuracy.

Furthermore, the invention disclosed in Japanese Patent Laid-Open H08-203133 generates a formatter driving clock by using a basic clock which changes in proportion to a value integrated a rotation speed of a turntable, a radius position, a CAV driving time, or a liner velocity.

However, in this invention, the above information is obtained to generate the clock based on the obtained information, and the invention also includes a circuit structure using the voltage-controlled oscillator. Therefore, the invention also includes uncertainty such as analogue, and does not secure sufficient accuracy, and especially when positional information is used, a time lag caused by the feedback of the positional information generates because the clock to be obtained depends on the accuracy.

As described above, any of the related arts are insufficient for a method for precisely forming an accurate CLV format.

SUMMARY OF THE INVENTION

The present invention challenges the problems of these related arts. It is, therefore, objects of the present invention to solve the problems in the related arts and to provide, without using a conventional method for generating a clock sequentially using a radius positional information while CAV driving, a method and a device for generating a formatter driving clock, a device for generating a driving clock, a method and a device for exposing an optical disc master plate, and an optical disc driving device, which adopt a formatter driving clock by obtaining an accurate and precise formatter driving clock generation time for achieving a CLV format with a calculation from a rotation angle speed omega 0, a CLV driving starting radius R0, and a track pitch p, and obtains an optical disc master plate and an information recording medium by forming an information track with the exposure using the formatter driving crock, and an optical disc mater plate using the methods and devices and an information recording medium using the optical disc master plate.

According to a first aspect of the invention there is provided a method of generating a formatter driving clock of an optical disk master plate exposure device as set out in Claim 1. Preferred features of this aspect are set out in Claims 2-3.

According to a second aspect of the invention there is provided a device for generating a formatter driving clock of an optical disk master plate exposure device as set out in Claim 4. Preferred features of this aspect are set out in Claims 5 and 6.

An optical disc master plate described in the present invention is **characterized in that** a spiral shaped information track with a constant pitch including a CLV format with a LAV driving state is formed by using the optical disc master plate exposure device described in the present invention.

An information recording medium described in the present invention comprises a spiral shaped information track with a constant pitch including a CLV format onto an optical disc master plate driven by a CAV, and is formed by the optical disc master plate described in the present invention.

BRIEF DESCRIPTION OF THE DRAWINGS

FIG. 1 is a block diagram illustrating a basic structure of an optical disc master plate exposure device in each embodiment of the present invention.

FIG. 2 is a view schematically illustrating the change in the elapsed time tn in the first embodiments of the present invention.

FIG. 3 is a view schematically illustrating the approximation tn in the first embodiments of the present invention.

FIG. 4 is a block diagram illustrating a schematic structure of a formatter driving clock generation circuit in the first embodiments of the present invention.

FIG. 5 is a block diagram illustrating a schematic structure of another formatter driving clock generation circuit in the first embodiments of the present invention.

FIG. 6 is a timing chart of a count value of a basic clock and a formatter driving clock which is delayed with a resolution equal or less than the basic clock by a designation of pulse state in the first embodiments of the present invention.

FIG. 7 is a view schematically illustrating the change in the clock period Tn in the second embodiments of the present invention.

FIG. 8 is a view schematically illustrating the approximate clock period Tn in the second embodiments of the present invention.

FIG. 9 is a block diagram schematically illustrating the formatter driving clock generation circuit in the second embodiments of the present invention.

FIG. 10 is a view schematically illustrating the change in the clock period Tn in the third embodiments of the present invention.

FIG. 11 is a view schematically illustrating the approximate clock period Tn in the third embodiments of the present invention.

FIG. 12 is a block diagram illustrating a schematic structure of the formatter driving clock generation circuit in the third embodiments of the present invention.

FIG. 13 is a view schematically illustrating the approximate clock period Tn when the generation period of the formatter driving clock in the forth embodiments of the present invention is for the truck of the optical disc.

FIG. 14 is a block diagram illustrating a schematic structure of the driving clock generation device in the fifth embodiments of the present invention.

FIG. 15A illustrates the CAV driving state in the fifth embodiments of the present invention; FIG. 15B is a view illustrating the operation example that the various driving clocks while forming the CLV format with the CLV driving state are approximated for each truck in the fifth embodiments of the present invention.

FIG. 16 is a view illustrating the example of the driving clock generation data circuit which stores clock data in storing means such as RAM, and the like in the fifth embodiments of the present invention.

FIG. 17 is a view illustrating the clock change in the processing when the CLV format exposure by the CAV driving and the CLV format exposure by the CLV driving are used together.

FIG. 18 is a block diagram illustrating the clock generation circuit for forming the conventional CLV format by the CAV driving.

BEST MODE FOR CARRYING OUT THE INVENTION

Hereinafter, embodiments of the present invention will be described with reference to the drawings.

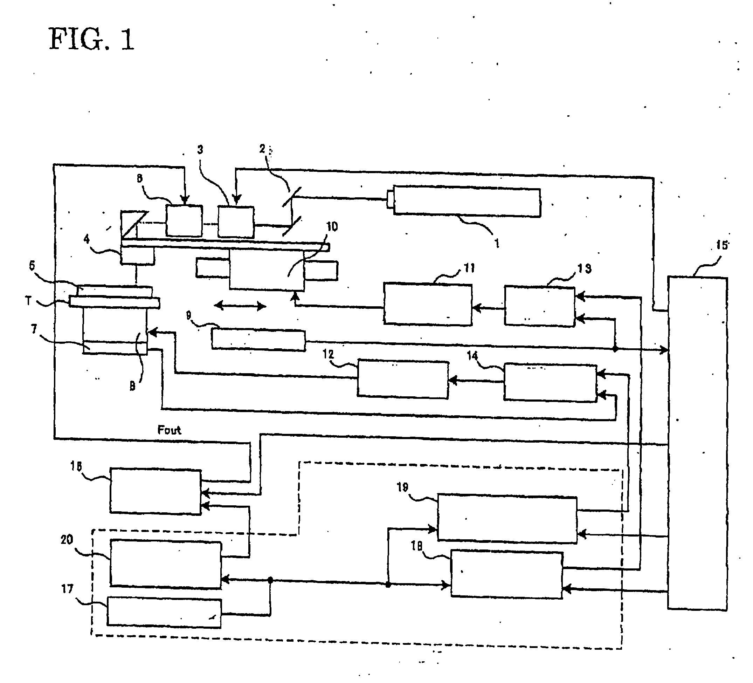

FIG. 1 is a block diagram illustrating the basic structure of optical disc master plate exposure device according to the present invention. In FIG. 1, an exposure laser 1 exposes an original glass disk 5 on which photoresist is applied. An exposure optical system 2 forms the light beam emitted from the exposure laser 1, and leads the light beam to a focus actuator 4. A light intensity modulator 3 changes the strength of the light beam irradiated on the original glass disk 5. A light modulator 6 turns on and off the light beam of the exposure laser 1 based on a signal F out from a format signal generator 16 for generating a signal to form a pre-embossed pit and a groove on the original glass disk 5. An encoder 7 is installed to a driving motor 8 of a turntable T, and outputs a pulse train in response to the rotation. A line encoder 9 detects a radius position of exposure spot.

The original glass disk 5 is attached to the turntable T, and rotates by the driving motor 8. The focus actuator 4 is moved in the radius direction of the original glass disc 5 by an air slider motor 10. The focus actuator 4 condenses the entered light beam into a minimum spot, and controls the focusing in order for the beam waist position to be kept in the photoresist position all the time. An optical system and the like for the focus control are not illustrated.

A slider motor driver 11 drives the air slider motor 10. A driving motor driver 12 drives the driving motor 8. A transversal feeding control circuit 13 is the circuit by which the air slider motor 10 is smoothly and precisely followed with respect to the movement commanded by a controller 15. A rotation driving control circuit 14 is the circuit by which the turntable T is smoothly and precisely followed with respect to the rotation command indicated by the controller 15. The reference numeral 17 is a basic clock generator. This basic clock generator 17 supplies a basic clock to a transversal feeding driving clock generation circuit 18 which generates a driving clock for supplying the driving clock to the transversal feeding control circuit 13, a rotation driving clock generation circuit 19 which generates a driving clock for supplying the driving clock to the rotation driving control circuit 14, and a formatter driving clock generation circuit 20 which generates a driving clock for driving the format signal generator 16. In FIG. 1, the part with the dotted line is the driving clock generation portion.

A sensor which detects an absolute position for presetting a liner scale value is omitted. An optical disc master plate exposure device requires setups such as exposure by two beams and meandering of exposure beam corresponding to various disc formats, but various exposure optical systems required for the setups are not directly related to the present invention, so those are omitted.

(First embodiments of the present invention)

First embodiment

The optical disc master plate exposure device of the first embodiment, as shown in FIG. 1, comprises the turntable T on which the original glass disk 5 of optical disc is placed, rotation driving means including the driving motor 8, the encoder 7, and the like for rotating the turntable T, convergence exposure means (convergence irradiation means) including the exposure optical system 2 and the focus actuator 4, and the like which converge and irradiate the optical beam for recording based on an information recording signal, transversal feeding means (not shown) for transversally moving the turntable T on which the original glass disc 5 is placed in a plane parallel to the original glass disc 5, and transversal feeding driving means including the air slider motor 10, the slider motor driver 11, and the like for transversally moving the convergence irradiation means of the optical beam for recording in a plane parallel to the original glass disk 5. With the controls of the rotation driving means and the transversal feeding driving means, a spiral shaped information track with a constant pitch is formed by CLV driving on the original optical disk 5 of optical disc with CAV (constant angular velocity) driving.

At this point, in the spiral shaped information track with a constant pitch formed by the CLV driving, the entire information track length L is represented by the equation 1.

$$L = \frac{\pi \times (r^2 - R_0{}^2)}{P}$$

**EQUATION 1**

The entire information track length L at the time t from the beginning of the CLV driving is obtained by the equation 3 with using the equation 2.

$$r = R_0 + \frac{P \times \omega_0 \times t}{2 \times \pi}$$

**EQUATION 2**

$\omega 0$ is a rotation angle speed of the turntable T, R0 is a CLV driving starting radius, and P is a track pitch. That is the equation 2 is substituted into the equation 1, and the equation 3 is obtained by organizing the substituted equation.

$$L = R_0 \times \omega_0 \times t + \frac{P \times \omega_0{}^2}{4 \times \pi} \times t^2$$

**EQUATION 3**

If the time t is obtained by solving the equation 3 for the time t from the beginning of the CLV driving, the equation 4 is obtained.

$$t = \frac{-B + \sqrt{B^2 + 4 \times A \times L}}{2 \times A}$$

**EQUATION 4**

Where, $A = \frac{P \times \omega_0{}^2}{4 \times \pi}$, $B = R_0 \times \omega_0$

The equation 4 represents an elapsed time from a beginning point of formation when a track length with formed information from the beginning point of the formation is L while forming a spiral shaped information truck with a constant pitch by CAV driving.

In the CLV format, a length corresponding to 1cb (channel bit) which is a basic of format is constant anywhere on the information track. Accordingly, adopting L cb as the length corresponding to 1 cb (fundamental length), the entire information track length L is represented by the equation 5.

**EQUATION 5** $\qquad L = Lcb \times n$ Where, n is a positive integer

The equation 5 is substituted into the equation 4, and the equation 6 is obtained by solving for the time t.

$$t_n = \frac{-B + \sqrt{B^2 + 4 \times A \times (Lcb \times n)}}{2 \times A}$$

**EQUATION 6**

where, tn indicates an elapsed time that the length corresponding to L cb passes.

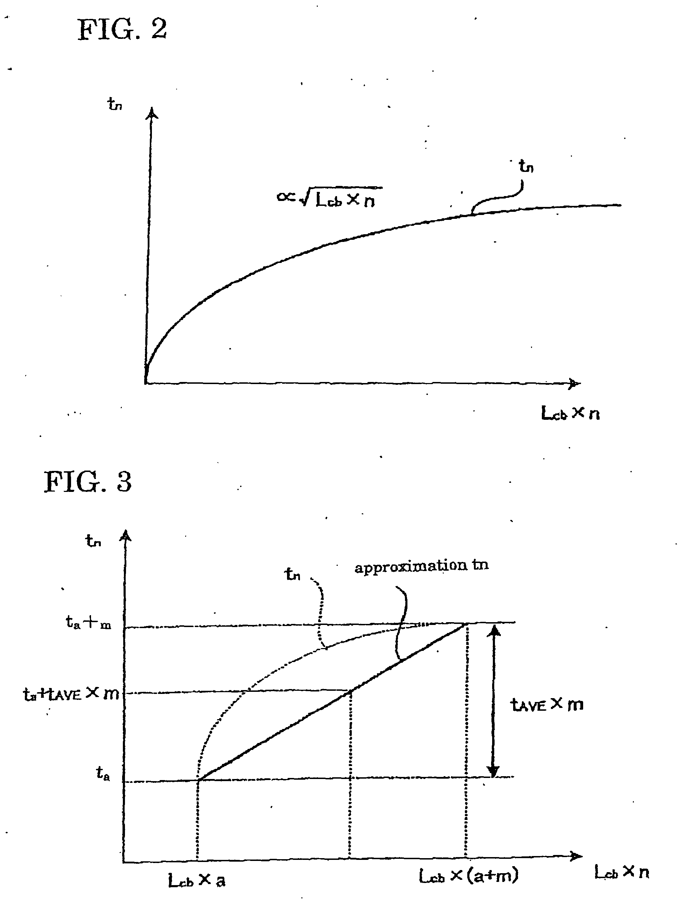

That is, the clock train generating for each elapsed time tn that the length corresponding to L cb passes is operated as a formatter driving clock, so that the information truck with the CLV format can be formed on the original

6

glass disc 5 driven by the CAV. FIG. 2 schematically illustrates the change in the elapsed time tn when the horizontal axis is L cb×n and when the vertical axis is tn.

Second embodiment

The generation clock position between m piece information tracks with the length corresponding to Lcb is obtained by the equation 7 using the averaged time interval tAVE of the value that the time interval between the leading end time ta and the back end time ta + m of the information track is divided by m.

$$t_i = t_a + t_{AVE} \times i$$
$$i = 1, \ 2, \ 3, \ \cdots, \ m$$

EQUATION 7

In the second embodiment, an approximate clock corresponding to each channel bit position between ta and ta+m is generated, adopting the clocks as formatter driving clocks. Since the time ti for generating the clock between the time ta to ta+m can be obtained from the primary expression of i, the calculation becomes easy. FIG. 3 schematically illustrates the approximate tn when the horizontal axis is L cb × n and the vertical axis is tn.

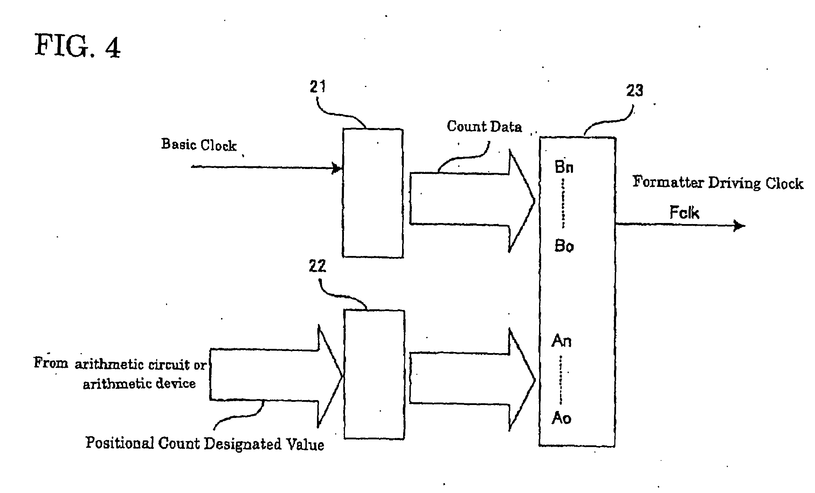

FIG. 4 is a block diagram illustrating the schematic structure of the formatter driving clock generation circuit 20 in the first embodiments. The formatter driving clock generation circuit 20 comprises a counter circuit 21 for counting a basic clock, a resistor circuit 22 for maintaining a positional count designated value corresponding to the clock generation position obtained by the methods described in the first embodiment and the second embodiment, a count value agreement detection circuit 23 for detecting the agreement between the count value of counter circuit 21 and the value set in the resistor circuit 22, and an arithmetic circuit (or arithmetic device) (not shown) for successively generating the clock generation positional data.

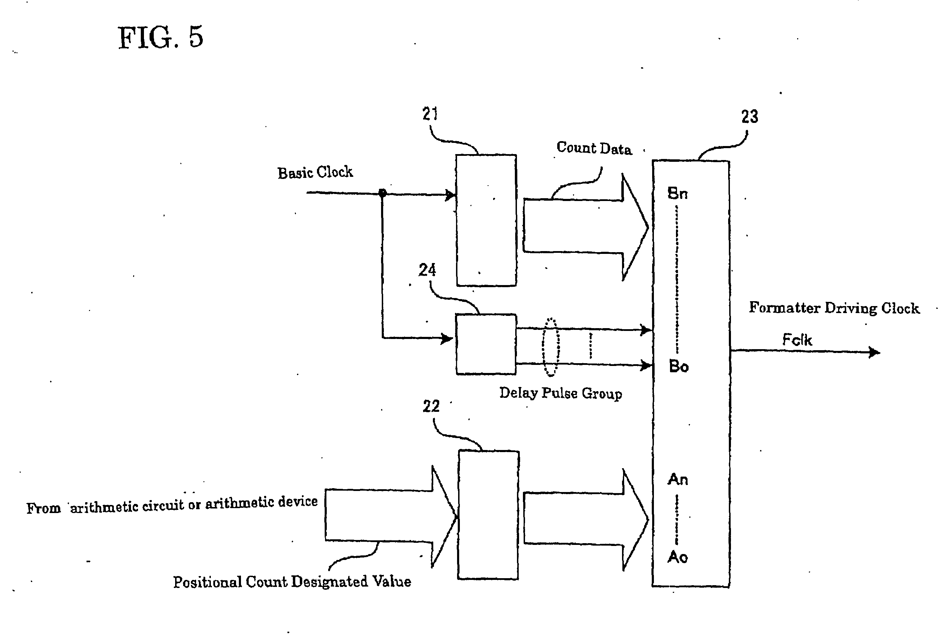

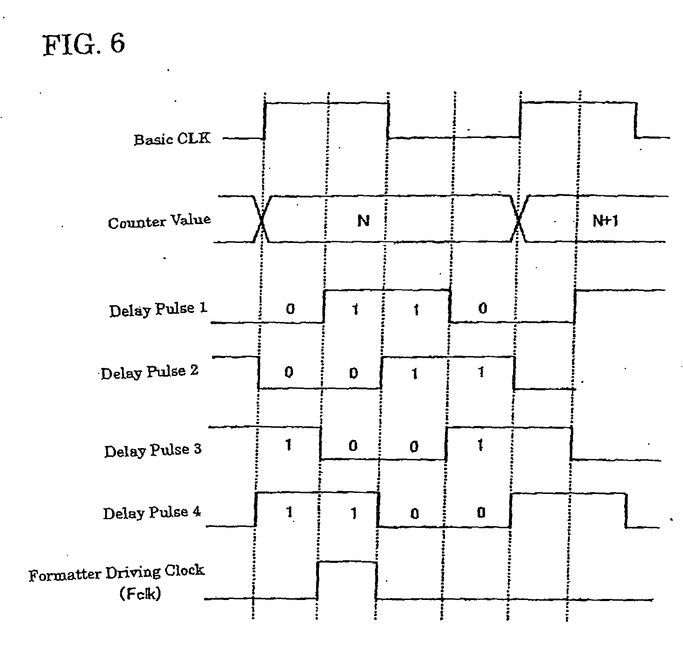

In the formatter driving clock generation circuit 20 shown in FIG. 5, a delay circuit 24 having a plurality of taps for successively delaying the basic clock by a certain interval, which is equal or less than the basic clock period, is added. As illustrated in FIG. 6, the formatter driving clock (F clk) generation position with the resolution equal or less than the basic clock can be designated by designating the counter value of the basic clock and each delaying pulse state.

The count length of the counter circuit 21 shown in FIGs. 4, 5 is not required to be countable the entire time for generating the formatter driving clock, and if it is configured by the count length which is equal or larger than the length corresponding to the maximum length of the generation clock period, a consecutive clock generation position can be designated.

The positional count designated value (data corresponding to the clock generation position) is continually obtained by the arithmetic circuit (or arithmetic device), and the clock position which is the closest to an ideal clock generation position (obtained by equation 7) for forming the CLV format in the CAV driving state is given as a value. The positional count designated value can be obtained sequentially by the arithmetic circuit (or the arithmetic device), but when the arithmetic time is a problem, all data are previously obtained, and methods such as storing in a ROM or RAM are used. Moreover, methods such as storing all data in an external storing device of hard disk and the like, and transmitting the data successively to a RAM on a formatter driving clock generation circuit may be used.

For the formatter driving clock generation, an error with respect to a real clock generation time is settled in equal or less than the resolution of time setting by controlling a target clock area for averaging.

For an ideal formatter driving clock, when a horizontal axis is a time, the time, period, and period difference corresponding to an information track length are changed into nonlinear because a liner velocity is constant in the CLV.

Therefore, the error between the formatter driving clock position obtained from the averaged value and the ideal position is changed by the time area for obtaining the average. At this point, in order for the error to be less than the resolution of the setup time (basic clock period), the target area to be averaged is determined.

The time error which carries out the averaging is set to in a range equal or less than the resolution of the time setting, so that the clock generation time to be obtained can obtain the same result when the averaging is not conducted.

(Seconds embodiments of the present invention)

First embodiment

If the time interval between tn clock and tn-1 clock, in other words, a clock period Tn is obtained from the equation 7, the equation 8 can be obtained.

## EQUATION 8

$$T_n = t_n - t_{n-1}$$
$$= \frac{1}{2 \times A} \times \left( \sqrt{B^2 + 4 \times A \times Lcb \times n} - \sqrt{B^2 + 4 \times A \times Lcb \times (n-1)} \right)$$

where, $A = \dfrac{P \times \omega_0{}^2}{4 \times \pi}$, $B = R_0 \omega_0$

A formatter driving clock for forming the CLV format with the CAV driving state can be generated by using the equation 8.

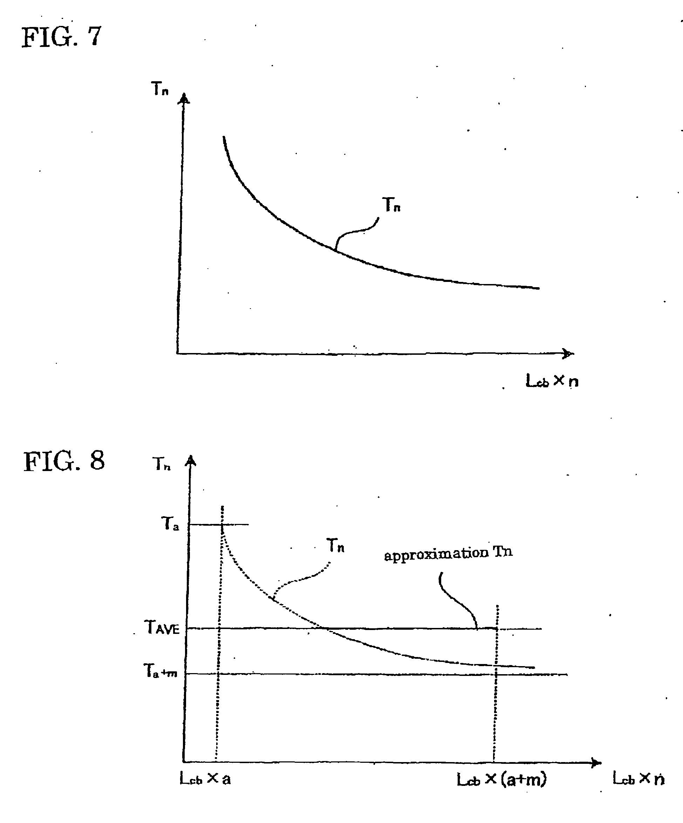

A period can be obtained by using the equation 8, so that the formatter driving clock generation circuit 20 can be configured by a general dividing circuit using a counter circuit, and the like. FIG. 7 schematically illustrates the change in the clock period Tn when the horizontal axis is L cb × n and the vertial axis is Tn.

Second Embodiment

The clock generation position between m piece information trucks with the length corresponding to L cb can be obtained by equation 9 using the averaged clock period TAVE of the clock included between the clock period Ta of the leading end position of the information truck and the clock period Ta + m of the back end of the information track.

## EQUATION 9

$$T_{n \cdot j} = T_{AVE}$$
$$j = 1, 2, 3, \cdots, m$$

In the second embodiment, an approximate clock corresponding to each channel bit position between the clock period Ta and the clock period Ta + m is generated, and the approximate clock is adopted as the formatter driving clock. Accordingly, the clock based on the periodic information can be generated. A formatter driving clock generation circuit can be configured by a simple dividing circuit using a counter circuit. FIG. 8 schematically illustrates the approximate clock period Tn when the horizontal axis L cb × n and the vertical axis is Tn.

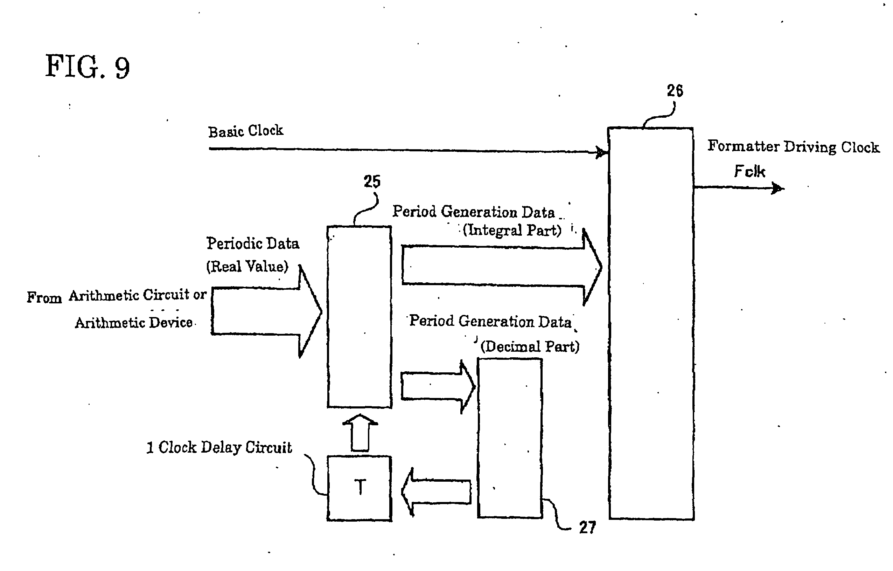

FIG. 9 is a block diagram illustrating the schematic structure of the formatter driving clock generation circuit 20. In this circuit, the periodic data (real value) of a desirable formatter driving clock (F clk) generated by an arithmetic circuit (or arithmetic device) (not shown) is given to a periodic data processing circuit 25. The periodic data processing circuit 25 divides the periodic data into an integral part and a decimal part, and the parts are respectively set in a period generation circuit 26 and a period fraction accumulation resistor 27. The period generation circuit 26 outputs a pulse for a designated number corresponding to a basic clock in accordance with the period generation data (integral part).

The period generation data (decimal part) is temporarily stored in the period fraction accumulation resistor 27, and is added to the periodic data (real value) for generating the next formatter driving clock (F clk), and the data processing for generating a period is again carried out.

Here, when the periodic data is generated for 1 pulse, the periodic data is updated for 1 pulse, and when the periodic data is generated by the averaged value, the periodic data is updated for each averaged area. The period generation circuit 26 is configured by a parallel and serial conversion circuit, and the like using a basic clock dividing circuit (or shift resistor).

The periodic data includes the calculations for obtaining a circular ratio and a square root; even though a significant digit is increased, an error is essentially included for the result (as long as calculating with the finite digit of arithmetic device, an exact value can not be obtained, including an error). Therefore, there may be a case that the accumulation value of the fraction, which has to be 0, dose not be 0. The period fraction accumulation resistor 27, which essentially becomes 0, is forcibly set to 0, so that an error is not transmitted to the following calculations.

The number of formatter driving clocks in an exposure time of optical disc master plate exposure device is enormous. The periodic data is calculated by ensuring a sufficient significant digit such that the accumulation error does not exceed the resolution of the period setup (basic clock period shown in FIG. 9), and the periodic data processing circuit 25 and the period fraction accumulation resistor 27 are configured to carry out the processing which ensures the sufficient significant digit.

For example, in the CLV format including the spiral shaped information track with a constant pitch, when tracking the information truck from the inner circumference to the outer circumference, the length of the information truck for any rotation angle ($\theta$ radian) along the information track from the spiral center extends $\theta 2 \times$ (track pitch) $/(2\pi)$. In case of $2\pi$ (one circuit of truck), the increment in the information truck length for each truck is $2\pi$ (truck pitch) length. For example, when $\theta = 2\pi$, and 1/integer of increment in the information truck length for each track ($2\pi$ (truck pitch) length) is equally set to a period length of formatter driving clock (a liner velocity is constant, so that a time and a line segment on an information truck are the same), a position of formatter driving clock is preciously determined for each track without having an error.

In the truck with a constant pitch spiral formed by the CLV driving, the entire track length L is represented by the equation 10, and a spiral radius position r is represented by the equation 11.

$$\text{EQUATION 10} \qquad L = \frac{\pi \times \left(r^2 - R_0{}^2\right)}{P}$$

$$\text{EQUATION 11} \qquad \begin{aligned} r &= R_0 + n \times P \\ n &= 1, \ 2, \ 3, \ \cdots \end{aligned}$$

At this point, R0 indicates a starting radius position of spiral, r is a radius position of spiral where a track length is measured, p is a spiral track pitch, and n represents the number of tracks.

The equation 12 is obtained by the equations 10 and 11.

$$\text{EQUATION 12} \qquad \begin{aligned} L &= 2 \times \pi \times R_0 \times n + n^2 \times \pi \times P \\ n &= 1, \ 2, \ 3, \ \cdots \end{aligned}$$

A truck length Ln of each track is obtained by the equation 12 as shown in the equation 13.

$$\text{EQUATION 13} \qquad \begin{aligned} L_n &= 2 \times \pi \times R_0 + (2 \times n - 1) \times \pi \times P \\ n &= 1, \ 2, \ 3, \ \cdots \end{aligned}$$

If a truck length difference between adjacent tracks is obtained by applying the equation 13 into the adjacent tracks, the equation 14 is obtained. As apparent from the equation 14, the track length difference between the adjacent tracks is constant.

**EQUATION 14**

$$(\text{truck length difference between adjacent tracks}) \simeq 2 \times \pi \times P = constant$$

In the equation 11, the spiral orbit to be obtained is adopted as a track unit. That is, one unit is represented when the rotation angle of the orbit along the track from the center of the spiral is $2\pi$. As a result, a truck length of a track is increased by $2\pi P$ for each track.

Instead of $2\pi$, when a certain angle $\theta c$ is one unit, the following equation 15 can be used instead of the equation 11 (at this point, angle $\theta c$ can be smaller or larger than $2\pi$, and a line segment of spiral shaped track which is divided by the angle $\theta c$ is called a segment).

EQUATION 15

$$r = \frac{R_0 + (s \times \theta c) \times P}{2 \times \pi}$$
$$s = 1, \ 2, \ 3, \ \cdots$$

where, s represents the number of segments. The equations 16, 17 are obtained by the equations 10, 15. An entire track length L is obtained by the equation 16, and a track length Ls of each segment is obtained by the equation 17.

EQUATION 16

$$L = R_0 \times (s \times \theta c) + \frac{P \times (s \times \theta c)^2}{4 \times \pi}$$
$$s = 1, \ 2, \ 3, \ \cdots$$

EQUATION 17

$$Ls = R_0 \times \theta c + \frac{P \times (2 \times s - 1) \times \theta c^2}{4 \times \pi}$$
$$s = 1, \ 2, \ 3, \ \cdots$$

If a track length difference in adjacent segments is obtained by applying the equation 17 into the adjacent segments, the equation 18 can be obtained. As apparent from the equation 18, the track length difference in the adjacent segments is constant.

EQUATION 18

$$\text{Track length difference in adjacement segments} = \frac{P \times \theta c^2}{2 \times \pi} = \text{constant}$$

Periodic data already includes an error because the arithmetic originally includes $\pi$, and the calculation for obtaining a square root, and the like can be obtained by an arithmetic device of significant digit.

Therefore, there is a case that the period fraction accumulation resistor 27, which has to be 0, dose not be exactly 0.

A reset input signal is added to the period fraction accumulation resistor 27 shown in FIG. 9, and the same initial setting (preset) value is forcibly set to each track. The transmission of error generated by the calculation is accordingly prevented by solving the error.

Consequently, a time for averaging is set in the range in which an error is equal or less than a resolution of period difference setup, so that the clock generation period difference to be obtained can obtain the same result when the averaging is not conducted.

(Third Embodiments)

First Embodiment

If a clock period difference $\Delta Tn$ between a clock period Tn and a clock period Tn-1 is obtained from the equation 8 in the second embodiments, the equation 19 can be obtained.

EQUATION 19

$$\Delta T_n = T_n - T_{n-1}$$
$$= \frac{1}{2 \times A} \times \left( \sqrt{B^2 + 4 \times A \times Lcb \times n} - 2 \times \sqrt{B^2 + 4 \times A \times Lcb \times (n-1)} + \sqrt{B^2 + 4 \times A \times Lcb \times (n-2)} \right)$$

where, $A = \dfrac{P \times \omega_0{}^2}{4 \times \pi}, \quad B = R_0 \omega_0$

The equation 20 can be obtained by solving for the clock period Tn with the equation 19.

$$\text{EQUATION 20} \qquad T_n = T_0 + \sum_{k=0}^{n-1} \Delta T_k$$

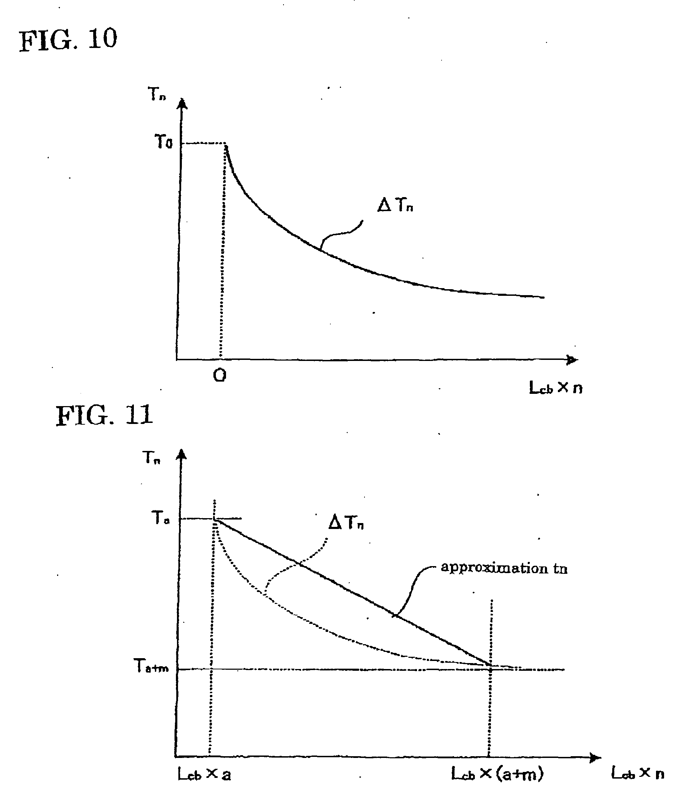

At this point, T0 is the first clock period when the formation of the information track of the CLV format is started. FIG. 10 schematically illustrates the change in the clock period difference $\Delta$ Tn when the horizontal axis is L cb $\times$ n and the vertical axis is Tn.

Second embodiment

Adopting a difference in the first clock period of the information track as $\Delta$ Ta, and a difference in the mth clock period of the information truck as $\Delta$ Ta+m, a clock generation position between m piece information tracks with the length corresponding to cannel pit is obtained by the equation 21 using an average difference value $\Delta$ TAVE of the difference of the clock period therebetween.

$$\text{EQUATION 21} \qquad \begin{array}{l} T_{a+k} = T_a + \Delta T_{AVE} \times k \\ k = 0, \ 1, \ 2, \ 3, \ \cdots, \ m-1 \end{array}$$

An approximate clock corresponding to each channel bit position between a clock period Ta and a clock period Ta + m is generated, and the clock is adopted as the formatter driving clock.

A generation clock period Tn + K between the clock period Ta to Ta + m can be obtained from the primarily expression of K, so that the calculation will be easy. Moreover, accuracy can be improved comparing to the approximating method in the second embodiment of the second embodiments. FIG. 11 schematically illustrates the approximate clock period Tn when the horizontal axis is L cb $\times$ n and when the vertical axis is Tn.

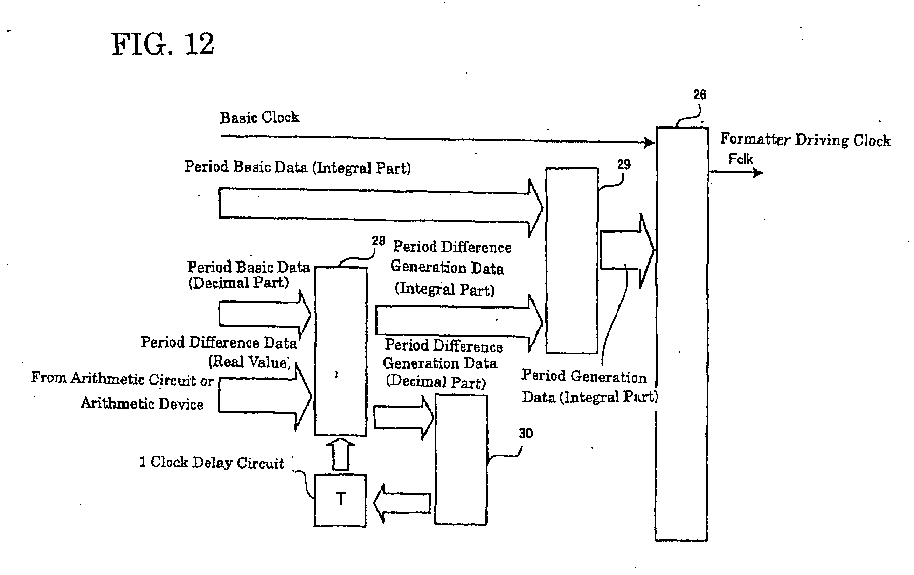

FIG. 12 is a block diagram illustrating the schematic structure of the formatter driving clock generation circuit 20 in the third embodiment. As shown in FIG. 12, periodic basic data (decimal part) and period difference data (real value) of a desirable formatter driving clock (F ck) generated by an arithmetic circuit (or arithmetic device) (not shown) are given to a period difference data processing circuit 28. The period difference data processing circuit 28 adds the periodic basic data (decimal part) and the period difference data (real value), and divides them into the integral part and the decimal part, and then the parts are respectively set to a periodic data generation circuit 29 and a period difference fraction accumulation resistor 30.

In the periodic data generation circuit 29, period generation data (integral part) is generated from the periodic basic data (integral part) and the period difference generation data (integral part), and outputs the period generation data. The period generation circuit 26 outputs a pulse for each designated number corresponding to a basic clock in accordance with the period generation data (integral part). The period difference generation data (decimal part) is temporary stored in the period difference fraction accumulation resistor 30, and the period difference data (real value) and the period basic data (decimal part) for generating the next formatter driving clock (F ck) are added to the period difference generation data (decimal part), and then the data processing for generating a period is again conducted.

At this point, the periodic basic data (integral part, decimal part) is fixed, and the period difference data (real value) is updated every one pulse when the period difference data (real value) is generated every one pulse, and the period difference data (real value) is updated every averaged area when the data is generated by the averaged value. The period generation circuit 26 is configured by a parallel and serial conversion circuit, and the like using a basic clock dividing circuit or a shift resistor.

The period difference data includes the calculation for obtaining a circle ratio and a square root, and the result includes an error. As long as the calculation is carried out by using an arithmetic device of finite digit, an exact value can not be obtained, and the error is included. Therefore, there may be a case that the accumulation value of the fraction, which should be 0, dose not become 0. Here, the period difference fraction accumulation resistor 27, which should be 0, is forcibly set to 0, so that the error is not transmitted to the following calculations.

The number of the formatter diving clocks in an exposure time of an optical disc master plate exposure device is enormous. In order for the accumulation of error not to exceed the resolution of the period setup (basic clock period shown in FIG. 12), the period difference data is calculated by ensuring a sufficient significant digit, the period difference data processing circuit 28, the periodic data generation circuit 29, and the period difference fraction accumulation resistor 30 are configured so as to achieve the processing which ensures a sufficient significant digit.

As well as explained in FIG. 9 of the second embodiments, the period difference data already includes an error because the calculation originally includes $\pi$, and the calculation for obtaining a square root, and the like is obtained by the arithmetic device of finite significant digit. Therefore, the period difference fraction accumulation resistor 30, which has to be 0, does not become exactly 0. Consequently, a reset input signal is added to the period difference fraction accumulation resistor 30 shown in FIG. 12, and the same initial setting (preset) value is forcibly set to for each track. The transmission of an error can be accordingly prevented by dissolving the error generated by the calculation.

Therefore, a time for averaging is set in the range that an error is equal or less than a resolution of period difference setup, so that a clock generation period difference to be obtained can obtain the same result when the averaging is not carried out.

(Fourth Embodiment)

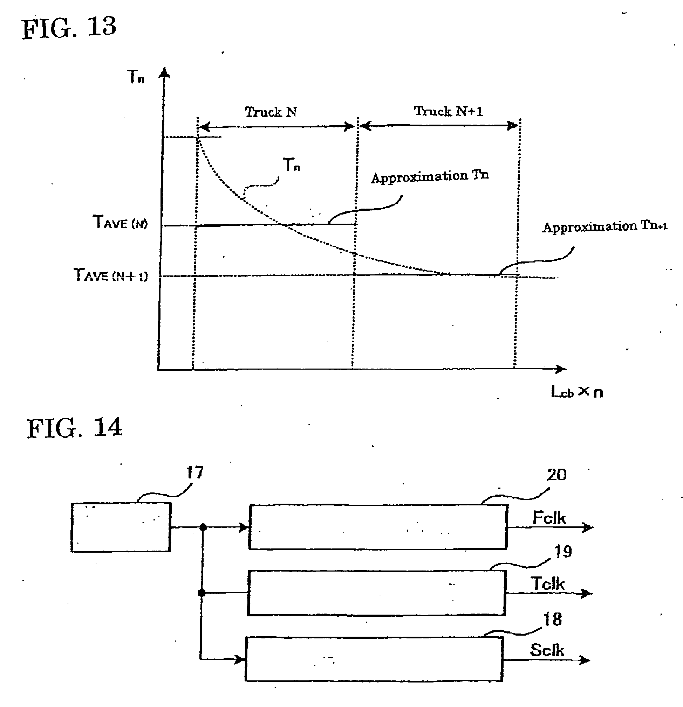

The operation when the area for generating the formatter driving clock in the embodiments 1 to 3 is for each track of optical disc will be explained with reference to FIG. 13.

The case for generating the formatter driving clock by the approximate clock period explained in the second embodiments is shown as the example. At this point, the track corresponds to the rotation angle $2\pi$ of the information truck formed into a constant pitch spiral shape. The truck length extends every $2 \times \pi \times$ track pitch length from the inner circumference toward the outer circumference of the optical disc.

At the starting position or the end position of the track, the information track which synchronizes exactly with an ideal CLV format is formed. In the approximating area, the information track is formed with an error of setup period with respect to an information arrangement in an ideal CLV format, but a phase relationship between the adjacent tracks is ensured in the entire tracks within an obvious error range.

The approximating area is not limited for a track, and it can be an area smaller than a track. The information track generally is configured by a series of sectors or a series of blocks configured by the plurality of sectors. These are shorter than a track length, and can be formed with maintaining a phase relationship between the adjacent tracks even if approximate data is updated for each sector or each block.

In this case, considering that the recording or the reproduction for the optical disc is carried out by the sector or the block, the recording reproduction clock in the sector or the block while recording and reproducing is constant, so that a desirable result is given to the stability of the recording and reproducing features.

(Fifth embodiment)

FIG. 14 is a block diagram illustrating the schematic structure of the driving clock generation device in the fifth embodiment. As shown in FIG. 14, by using the same basic clock generator 17, the driving clock generation device comprises the formatter driving clock generation circuit 20 for generating the formatter driving clock (F clk), the rotation driving clock generation circuit 19 for generating the turntable rotation driving clock (T ck), and the transversal feeding driving clock generation circuit 18 for generating the transversal feeding driving clock (S clk).

The formatter driving clock generation circuit 20 can generate the formatter driving clock (Fa; constant) while forming the CLV format by the CLV driving and can generate the CLV formatter driving clock (Fn; n is track number) generated by the methods described in the embodiments 1 to 3. The CAV driving and the CLV driving can be switched by clock switching means (not shown).

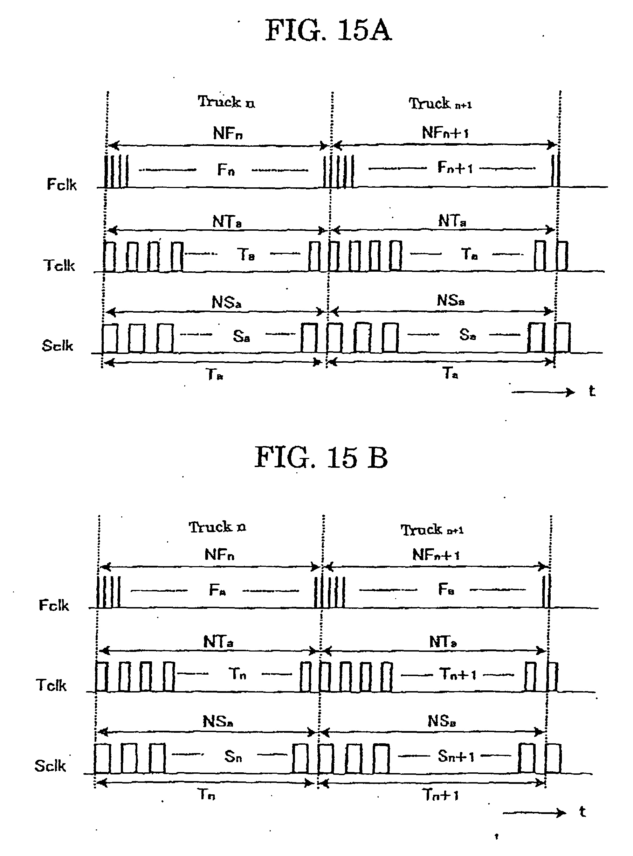

FIGs. 15A and 15B are views illustrating the operation examples that the various driving clocks while forming the CLV format with the CAV driving state and the CLV driving state are approximated for each track. In FIGs. 15A and 15B, n is variable which changes a value for each track, a is constant, NFn, NTa, and NSa represent the number of generations of each driving clock while forming one track.

FIG. 15A illustrates the generation of each driving clock while forming the CLV format by the CAV driving. The rotation and transversal feeding of the turntable driven by the CAV is driven at a constant speed (constant frequency: corresponding to Ta, Sa). The number of clocks (NTa, NSa) for a track is not changed. A formatter driving clock frequency Fn is changed for a track.

The number of the formatter driving clocks for a track is exactly increased in proportion to $2 \times \pi \times$ track pitch length when the information track is formed from the inner circumference to the outer circumference of the optical disc.

FIG. 15B illustrates the conventional example of the generation of the each driving clock while forming the CLV format by the CLV driving. The rotation and the transversal feeding of the turntable are driven by the CLV driving so as to have a constant liner velocity, so that a track period and each frequency (Tn, Sn) for a track are changed. However the number of clocks for a track (NTa, NSa) are not changed. The frequency Fa of formatter driving clock is constant, and the number of formatter driving clocks for a track exactly increase for a track in proportional to $2 \times \pi \times$ truck pitch length while forming the information track from the inner circumference to the outer circumference of the optical disc. The driving clock generation method relating to the formation of the CLV format by the CLV driving is disclosed in Japanese Patent Laid-Open 2001-143376.

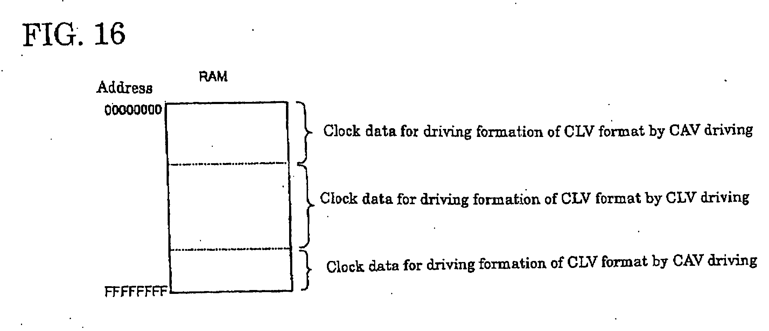

The positional count designated value (divided value in the clock generation circuit using the dividing) in which the driving state (CLV driving or CAV driving) is changed with respect to the formatter driving clock generation circuit 20 shown in FIG. 4 or FIG. 5 is generated, and the CLV format forming operation in which the driving state is changed from the CAV driving state to the CLV driving state or from the CLV driving state to the CAV driving state while the CLV format forming operation becomes possible by inputting the value into the resistor 22 (for example, preparing the driving clock generation data which stores the clock data in the storing means such as RAM as shown in FIG. 16).

(Sixth embodiments)

First embodiment

Next, an exposure processing of an information truck by the optical disc master plate exposure device according to the present invention will be described. The CLV format exposure by the CAV driving, the CLV format exposure by the CLV driving, or the exposure using the both is carried out by using the optical disc master plate exposure device shown in FIG. 1. FIG. 17 illustrates the exposure example when the processing using the both of the CLV format exposure by the CAV driving and the CLV format exposure by the CLV driving is carried out. In this example, the inner circumference portion and the outer circumference portion of the optical disc are driven by the CAV. In order to avoid the generation of mechanical vibration caused by the rapid change in the rotation speed of the turntable by the CLV driving, the inner circumference portion of the optical disc is driven by the CAV. Moreover, in order to shorten the exposure time, the outer circumference portion of the optical disc is driven by the CAV.

By conducting the exposure with the high speed CAV driving, the exposure time is further shortened, but the defect such as insufficiency of strength in the exposure light accompanying the increase of the exposure liner velocity in the outer circumference portion is generated. Therefore, the driving condition is set taking the output of the laser by the exposure switching means, the mechanical rigidity of the device or the like into consideration.

The transversal feeding driving clock, the turntable rotation driving clock, and the formatter driving clock for forming the CLV format by the CAV driving are formed with respect to the transversal feeding control circuit 13, the rotation driving control circuit 14, and the format signal generator 16 by the driving clock generation portion shown in FIG. 1 with the dotted line portion, and then the transversal feeding driving clock, the turntable rotation driving clock, and the formatter driving clock for forming the CLV format by the CLV driving are successively generated. At the same time, the information truck is formed by turning on and off or meandering the exposure light beam by the output of the formatter signal generator 16, and exposure amount modulation for obtaining a constant shape groove is carried out by the light volume modulator 3 (the exposure amount is at a constant value while driving by the CLV, but should be modulated by the exposure radius position while driving by the CAV), and then appropriate exposure for the optical glass plate 5 on which the CLV format is formed is conducted.

Second embodiment

An optical disc driving device (not shown), which can correspond to both of the exposure methods such as the CLV format exposure by the CLV driving and the CLV format exposure by the CAV driving, having the driving clock generation device described in the fifth embodiment carries out writing that the driving method is switched by a writing area while forming the information pit comprising the CLV format.

The optical disc driving device of the second embodiments comprises a driving clock generation device, a turntable on which an optical disc medium is placed and rotates by rotation driving means, and convergence and irradiation means of an optical beam for recording based on an information recording signal forming an information pit onto the optical disc medium, and transversal feeding means for moving the convergent and irradiation means in parallel to the plane of the optical disc medium, and driving control means for controlling the rotation driving means and the transversal feeding driving means.

The information track of the information pit train is written onto the optical disc medium by the driving control means. For the writing of the information, the writing of the CLV format may be conducted with the CLV driving state, or may be conducted by switching to the CLV format writing with the CAV driving state.

In the optical disc driving device, the CLV format wiring by the CAV driving is possible, so it is possible to provide the optical disc medium that the phase relationship between the adjacent tracks such as wobble information or pit information formed onto the information track is formed as same as an ideal CLV format.

It is also possible to switch the CLV format writing by the CAV driving and the CLV format writing by the CLV driving. Therefore, the writing operation to the optical disc medium in which the CLV format forming method is switched in accordance with the formation area of the information track becomes possible. In the writing of the CLV format which is formed by the spiral shaped information track with a constant track pitch from the inner circumference to the outer circumference, the writing time is shortened (inner circumference; CLV driving, outer circumference; CAV driving), the mechanical vibration accompanying the rapid change in the rotation speed of the turntable, and the power shortage of the writing laser irradiation for the exposure in the outer circumference portion while writing with the CAV driving can be dissolved (inner circumference; CAV driving, outer circumference; CLV driving).

(Seventh Embodiment)

The CLV format is formed on an original glass plate with the CAV driving state by the optical disc master plate exposure device described in the first and sixth embodiments, so that the optical disc original plate on which the phase relationship of various information on the adjacent tracks is formed with an obvious relationship and is maintained can be obtained. In the recording medium which is formed thereby, the phase relationship between the adjacent tracks of various types of information formed on the information track and the phase relationship between the adjacent tracks in the CLV format are equally formed. Therefore, the optical disc medium of the information recording medium that a problem of closstalk by the adjacent tracks while reproducing is extremely small can be obtained.

According to the method descried in the present invention, the formatter driving clock, which enables CLV format exposure with the CAV driving state, can be generated by an accurate calculation without including an analogue structure and radius positional information for each time.

According to the method described in the present invention, the formatter driving clock can be generated by a further simple calculation.

According to the method described in the present invention, a time error for conducting averaging is set in a range equal or less than a resolution of setup time, and a clock generation time can obtain the same result when the averaging is not carried out.

According to the method described in the present invention, a phase relationship between adjacent tracks which includes various information placed onto an information track can coincide with an accurate time position for each track.

According to the method described in the present invention, a time for conducting averaging is set that an error is in the range equal or less than a resolution of period difference setup, and a clock generation period difference can obtain the same result when the averaging is not carried out.

According to the device described in the present invention, the formatter driving clock, which enables the CLV format exposure with the CAV driving state, can be generated.

According to the device described in the present invention, the formatter driving clock can be generated by a further simple calculation.

According to the device described in the present invention, a time error for conducting averaging is set in the range equal or less than a resolution of setup time, and a clock generation time can obtain the same result when the averaging is not carried out.

According to the device described in the present invention, a time error for conducting averaging is set in the range equal or less than a resolution of period setup, and a clock generation period can obtain the same result when the averaging is not carried out.

According to the device described in the present invention, a time error for averaging is set in a range equal or less than a resolution of period difference setup, and a clock generation period difference can obtain the same result when the averaging is not carried out.

According to the device described in the present invention, a phase relationship between the adjacent tracks which includes various information placed onto the information track can coincide with an accurate time position for each track.

According to the device described in the present invention, the time for conducting averaging is set that the error is in the range equal or less than the resolution of the period difference setup, and the clock generation period difference can obtain the same result when the averaging is not carried out.

The device described in the present invention can correspond to the CLV format formation by the CLV driving and the CLV format formation by the CAV driving, and can switch the driving method of the CAV or the driving method of the CLV by a formation area while forming an information track.

The method described in the present invention can correspond to the CLV format exposure by the CLV driving and the CLV format exposure by the CAV driving, and can conduct exposure by switching the driving method of CAV or CLV in accordance with an exposure area while exposing the information track of the CLV format.

The device described in the present invention enables the CLV format exposure by the CLV driving or the CAV driving and can expose by switching the driving method of the CAV or the CLV in accordance with the exposure area while exposing the information track.

The device described in the present invention corresponds to the CLV format exposure by the CLV driving and the CLV format exposure by the CAV driving, and can conduct writing by switching the driving method in accordance with a writing area while forming an information pit formed by the CLV format.

By using the optical disc master plate described in the present invention, the information recording medium that a phase relation ship between adjacent trucks of various types of information formed on an information track is formed as well as a phase relationship between adjacent tracks in the CLV format is formed.

By using the information recording medium described in the present invention, closstalk between adjacent tracks by various types of information formed on an information track is reduced.

According to the present invention, the accurate formatter driving clock can be generated by the calculation using a clock generation time, clock period, period difference, and the values averaged thereby. Consequently, with an optical disc master plate exposure device using the methods, an optical disc master plate and an information recording medium, which curb crosstalk by various types information on an information track, can be obtained by exposure of a CLV format with a switchable CLV driving and CAV driving and by forming an information track having an accurate phase relationship between adjacent tracks.

## Claims

1. A method for generating a formatter driving clock of an optical disc master plate exposure device for forming a spiral shaped information track with a constant pitch including a CLV format onto an optical disc master plate driven by a CAV,

   **characterized by**

   generating said formatter driving clock by using a period of a clock train generated by a clock generation time obtained from a track pitch (P), a rotation angle frequency of the optical disc master plate driven by the CAV, a fundamental length of the information truck of the CLV format, and a CLV driving starting radius position (R0).

2. A method for generating a formatter driving clock according to Claim 1, **characterized in that**, said formatter driving clock is generated by using an average clock frequency of the clock train included between any clocks having a plurality of clocks generated by using said clock generation time.

3. A method for generating a formatter driving clock according to Claim 2, **characterized in that,** the number of clocks of a target to be averaged is set in order for a clock period calculated for obtaining said average clock period to be equal or less than a resolution of a pulse generation period.

4. A device for generating a formatted driving clock of an optical disc master plate exposure device for forming a spiral shaped information track with a constant pitch including a CLV format onto an optical disc master plate driven by a CAV, comprising:

   detecting means for detecting each value of a track pitch (P), a rotation angle frequency of said optical disc master plate driven by the CAV, and a fundamental length of the information track of said CLV format, and a CLV driving starting radius position (R0);

   arithmetic means for obtaining a period of a clock train generated by a clock generation time based on the value obtained by said detecting means; and

   counting means for generating the formatter driving clock in accordance with an output of said arithmetic means.

5. A device for generating a formatter driving clock according to Claim 4, further comprising average calculation means for obtaining an average clock period of a clock train included between any clocks having a plurality of clocks generated by using a clock generation time of said arithmetic means,

   **characterized in that,** the formatter driving clock is generated by the counting means in accordance with an output of said average calculation means.

6. A device for generating a formatter driving clock according to Claim 5, further comprising setting up means for setting the number of clocks of a target to be averaged in order for the average clock period calculated by said average calculation means to be equal or less than a resolution of a pulse generation period.

**Patentansprüche**

1. Verfahren zum Erzeugen eines Formatierer-Ansteuerungstakts einer Master-Platten-Belichtungsvorrichtung für optische Platten, um eine spiralförmige Informationsspur mit einer konstanten Schrittweite einschließlich eines CLV-Formats auf einer mit einer CAV angesteuerten Master-Platte für optische Platten zu bilden, **gekennzeichnet durch** Erzeugen des Formatierer-Ansteuerungstakts unter Verwendung einer Periode eines Taktzugs, der **durch** eine Takterzeugungszeit erzeugt wird, die aus einer Spurschrittweite (P), einer Drehwinkelfrequenz der mit der CAV angetriebenen Master-Platte für optische Platten, einer Grundlänge der Informationsspur des CLV-Formats und einer CLV-Ansteuerungs-Startradiusposition (R0) erhalten wird.

2. Verfahren zum Erzeugen eines Formatierer-Ansteuerungstakts nach Anspruch 1, **dadurch gekennzeichnet, dass** der Formatierer-Ansteuerungstakt unter Verwendung einer durchschnittlichen Taktfrequenz des Taktzugs erzeugt wird, die zwischen irgendwelchen Takten liegt, die mehrere Takte umfassen, die unter Verwendung der Takterzeugungszeit erzeugt werden.

3. Verfahren zum Erzeugen eines Formatierer-Ansteuerungstakts nach Anspruch 2, **dadurch gekennzeichnet, dass** die Anzahl von Takten eines Mittelungsziels so gesetzt wird, dass eine Taktperiode, die berechnet wird, um die durchschnittliche Taktperiode zu erhalten, gleich oder kleiner als eine Auflösung einer Impulserzeugungsperiode ist.

4. Vorrichtung zum Erzeugen eines Formatierer-Ansteuerungstakts einer Master-Platten-Belichtungsvorrichtung für optische Platten, um eine spiralförmige Informationsspur mit einer konstanten Schrittweite einschließlich eines CLV-Formats auf einer mit einer CAV angetriebenen Master-Platte für optische Platten zu bilden, die umfasst:

   Detektionsmittel, um jeweilige Werte einer Spurschrittweite (P), einer Drehwinkelfrequenz der mit der CAV angetriebenen Master-Platte für optische Platten, einer Grundlänge der Informationsspur des CLV-Formats und einer CLV-Ansteuerungs-Startradiusposition (R0) zu detektieren;
   Arithmetikmittel, um eine Periode eines Taktzugs zu erhalten, der durch eine Takterzeugungszeit auf der Grundlage der durch die Detektionsmittel erhaltenen jeweiligen Werte erzeugt wird; und
   Zählmittel, um den Formatierer-Ansteuerungstakt in Übereinstimmung mit einem Ausgang der Arithmetikmittel zu erzeugen.

5. Vorrichtung zum Erzeugen eines Formatierer-Ansteuerungstakts nach Anspruch 4, die ferner Durchschnittsberechnungsmittel umfasst, um eine durchschnittliche Taktperiode eines Taktzugs zu erhalten, die zwischen irgendwelchen Takten liegt, die mehrere Takte umfassen, die unter Verwendung einer Takterzeugungszeit der Arithmetikmittel erzeugt werden, **dadurch gekennzeichnet, dass** der Formatierer-Ansteuerungstakt durch die Zählmittel in Übereinstimmung mit einem Ausgang der Durchschnittsberechnungsmittel erzeugt wird.

6. Vorrichtung zum Erzeugen eines Formatierer-Ansteuerungstakts nach Anspruch 5, die ferner Einstellmittel umfasst, um die Anzahl von Takten eines Mittelungsziels so zu setzen, dass die durchschnittliche Taktperiode, die durch die Durchschnittsberechnungsmittel berechnet wird, gleich oder kleiner als eine Auflösung einer Impulserzeugungsperiode ist.

**Revendications**

1. Procédé pour générer une horloge de commande de dispositif de formatage d'un dispositif d'exposition de matrice de disque optique pour former une piste d'informations en forme de spirale avec un pas constant ayant un format CLV sur une matrice de disque optique entraînée par CAV, **caractérisé par** la génération de ladite horloge de commande de dispositif de formatage en utilisant une période d'un train d'horloges généré par un temps de génération d'horloge obtenu à partir d'un pas de piste (P), d'une pulsation de rotation de la matrice de disque optique entraînée par CAV, d'une longueur de base de la piste d'informations du format CLV et d'une position de rayon de début de commande CLV (R0).

2. Procédé pour générer une horloge de commande de dispositif de formatage selon la revendication 1, **caractérisé en ce que** ladite horloge de commande de dispositif de formatage est générée en utilisant une fréquence d'horloge moyenne du train d'horloges inclus entre toutes horloges ayant une pluralité d'horloges générées en utilisant ledit temps de génération d'horloge.

3. Procédé pour générer une horloge de commande de dispositif de formatage selon la revendication 2, **caractérisé en ce que** le nombre d'horloges d'une cible à moyenner est fixé afin qu'une période d'horloge calculée pour obtenir ladite période d'horloge moyenne soit égale ou inférieure à une résolution d'une période de génération d'impulsion.

4. Dispositif pour générer une horloge de commande de dispositif de formatage d'un dispositif d'exposition de matrice de disque optique pour former une piste d'informations en forme de spirale avec un pas constant ayant un format CLV sur une matrice de disque optique entraînée par CAV, comprenant :

des moyens de détection pour détecter chaque valeur d'un pas de piste (P), d'une pulsation de rotation de ladite matrice de disque optique entraînée par CAV, et d'une longueur de base de la piste d'informations dudit format CLV, et d'une position de rayon de début de commande CLV (R0) ;

des moyens arithmétiques pour obtenir une période d'un train d'horloges généré par un temps de génération d'horloge sur la base de la valeur obtenue par lesdits moyens de détection ; et

des moyens de comptage pour générer l'horloge de commande de dispositif de formatage en fonction d'une sortie desdits moyens arithmétiques.

5. Dispositif pour générer une horloge de commande de dispositif de formatage selon la revendication 4, comprenant en outre des moyens de calcul de moyenne pour obtenir une période d'horloge moyenne d'un train d'horloges inclus entre toutes horloges ayant une pluralité d'horloges générées en utilisant un temps de génération d'horloge desdits moyens arithmétiques,

**caractérisé en ce que** l'horloge de commande de dispositif de formatage est générée par les moyens de comptage en fonction d'une sortie desdits moyens de calcul de moyenne.

6. Dispositif pour générer une horloge de commande de dispositif de formatage selon la revendication 5, comprenant en outre des moyens de détermination pour déterminer le nombre d'horloges d'une cible à moyenner afin que la période d'horloge moyenne calculée par lesdits moyens de calcul de moyenne soit égale ou inférieure à une résolution d'une période de génération d'impulsion.

## FIG. 1

## FIG. 2

## FIG. 3

# FIG. 4

Basic Clock

**21**

Count Data

**23**

Bn
⋮
Bo

Formatter Driving Clock

Fclk

**22**

From arithmetic circuit or
arithmetic device

An
⋮
Ao

Positional Count Designated Value

EP 1 463 040 B1

FIG. 5

EP 1 463 040 B1

# FIG. 6

FIG. 7

FIG. 8

# FIG. 9

Basic Clock

Formatter Driving Clock
$Fclk$

26

Period Generation Data
(Integral Part)

25

Periodic Data
(Real Value)

From Arithmetic Circuit or
Arithmetic Device

Period Generation Data
(Decimal Part)

1 Clock Delay Circuit

T

27

EP 1 463 040 B1

## FIG. 10

## FIG. 11

# FIG. 12

Basic Clock

Formatter Driving Clock
Fclk

Period Basic Data (Integral Part)

26

29

Period Basic Data
(Decimal Part)

28  Period Difference
Generation Data
(Integral Part)

Period Difference Data
(Real Value)

Period Difference
Generation Data
(Decimal Part)

From Arithmetic Circuit or
Arithmetic Device

Period Generation
Data (Integral Part)

30

1 Clock Delay Circuit

T

## FIG. 13

## FIG. 14

# FIG. 15A

# FIG. 15 B

# FIG. 16

Address     RAM
00000000

} Clock data for driving formation of CLV format by CAV driving

} Clock data for driving formation of CLV format by CLV driving

} Clock data for driving formation of CLV format by CAV driving

FFFFFFFF

EP 1 463 040 B1

## FIG. 17

Tclk
Sclk

Area A: CLV format exposure by CAV driving

Area B: CLV format exposure by CLV driving

Area C: CLV format exposure by CAV driving

$\propto 1/r$

A    B    C    r

## FIG. 18

Positional Information

101    102    103

104

**EP 1 463 040 B1**

## REFERENCES CITED IN THE DESCRIPTION

### Patent documents cited in the description

- JP 2000163809 A
- JP H05234152 A
- JP H0689468 A
- JP H08203133 A
- JP H0917115 A
- JP 2001143376 A